(19) **Europäisches Patentamt**
**European Patent Office**
**Office européen des brevets**

(11) **EP 3 070 512 B1**

(12) **EUROPEAN PATENT SPECIFICATION**

(45) Date of publication and mention
of the grant of the patent:
**19.09.2018 Bulletin 2018/38**

(51) Int Cl.:
**G02B 27/22** *(2018.01)*    **H04N 5/74** *(2006.01)*

(21) Application number: **14861227.8**

(86) International application number:
**PCT/JP2014/005080**

(22) Date of filing: **06.10.2014**

(87) International publication number:
**WO 2015/072066 (21.05.2015 Gazette 2015/20)**

(54) **STEREOSCOPIC DISPLAY**

**STEREOSKOPISCHE ANZEIGE**

**DISPOSITIF D'AFFICHAGE STÉRÉOSCOPIQUE**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.11.2013 JP 2013235009**

(43) Date of publication of application:
**21.09.2016 Bulletin 2016/38**

(73) Proprietor: **National Institute of Information and Communications Technology**
**Koganei-shi**
**Tokyo**
**184-8795 (JP)**

(72) Inventor: **YOSHIDA, Shunsuke**
**Koganei-shi, Tokyo 184-8795 (JP)**

(74) Representative: **Gill, Stephen Charles et al**
**Mewburn Ellis LLP**
**City Tower**
**40 Basinghall Street**
**London EC2V 5DE (GB)**

(56) References cited:
**JP-A- H1 055 027**     **JP-A- H1 055 027**
**JP-A- 2006 189 837**   **JP-A- 2007 140 009**
**JP-A- 2008 102 430**   **US-A- 4 101 188**
**US-A1- 2012 146 897**  **US-B1- 7 446 733**

## Description

[Technical Field]

The present invention relates to a three-dimensional display that presents a three-dimensional image.

[Background Art]

Integral Photography (IP) is one of techniques that enable three-dimensional images to be observed with naked eyes. A three-dimensional display, which is the application of Integral Photography, has been developed (see Patent Document 1, for example).

In such a three-dimensional display, as shown in Patent Document 1, for example, a lens array made of a plurality of convex lenses are arranged as a light beam controller on an image presentation surface. A spatial light modulator such as an LCD (a Liquid Crystal Display) is used for the image presentation surface. The spatial light modulator has a light emission surface in which a plurality of pixels are arranged in the form of a matrix. The light emission surface is sectioned into a plurality of square unit regions. Each unit region is constituted by a plurality of pixels, and presents an element image. The plurality of lenses of the lens array are respectively arranged above the plurality of unit regions. The light generated by each pixel is emitted as a light beam directed only in a specific direction by the effects of the lens. Therefore, a plurality of light beams are formed in a plurality of different directions by a plurality of pixels in each unit region. A three-dimensional image that can be identified from a specific viewing area is presented by the plurality of light beams from the plurality of unit regions.

US 7446733 proposes a three-dimensional image display. US 4101188 proposes an optical magnifying device.

[Patent Document 1] JP 2006-98775 A

[Summary of Invention]

[Technical Problem]

However, in the conventional three-dimensional display, the light generated by the plurality of pixels in each square unit region of the spatial light modulator is emitted in respective specific directions by each circular lens. In this case, pixels located at four corners of each unit region are not contributed to the presentation of the three-dimensional image. Therefore, wasteful pixels are generated in the spatial light modulator.

Further, because the plurality of pixels of the spatial light modulator are arranged in a lattice shape, angular intervals between light beams emitted in a plurality of directions by each lens are not equal to one another. Thus, degradation in image quality is likely to occur.

An object of the present invention is to provide a three-dimensional display in which a plurality of pixels of a spatial light modulator can be effectively utilized, and image quality of a three-dimensional image can be improved.

[Solution to Problem]

(1) A three-dimensional display according to the present invention is disclosed in claim 1.
In the three-dimensional display, light is generated by the plurality of pixels of the spatial light modulator. The light generated by the plurality of pixels are guided onto the screen by the rearrangement optical element, so that the plurality of pixels are rearranged on the screen. Directions of the light generated from the plurality of pixels rearranged on the screen are respectively controlled by the light beam controller, whereby the plurality of light beams are emitted. The spatial light modulator is controlled by the control means such that the three-dimensional image is presented by the plurality of light beams emitted by the light beam controller.
In this case, the plurality of pixels can be rearranged on the screen such that the arrangement of the plurality of pixels rearranged on the screen is different from the arrangement of the plurality of pixels of the spatial light modulator. Thus, the plurality of pixels can be rearranged on the screen such that the arrangement of the plurality of pixels adapted to the shape of the viewing area is formed. Therefore, all of the pixels of the spatial light modulator can be effectively utilized.
Further, the plurality of pixels can be rearranged on the screen such that the angular intervals between the plurality of light beams emitted from the plurality of pixels to the viewing area are equal to one another.
Further, the plurality of pixels can be rearranged in part of the region with high density. Therefore, image quality of the three-dimensional image can be improved.
(2) The rearrangement optical element may include a plurality of light-guiding elements that respectively guide the light generated by the plurality of pixels of the spatial light modulator onto the screen.
In this case, it is possible to respectively guide the light generated by the plurality of pixels of the spatial light modulator to any position on the screen by respectively adjusting shapes or directions of the plurality of light-guiding elements.
(3) Each of the plurality of light-guiding elements may include an optical fiber. In this case, it is possible to easily rearrange each pixel at any position on the screen by bending the optical fiber. Thus, flexibility in rearrangement of the plurality of pixels on the screen is increased.

(4) Each of the plurality of light-guiding elements may include a lens. In this case, the light generated by each pixel of the spatial light modulator is collected by each lens, and an image is formed at any position on the screen. Thus, utilization efficiency of light can be improved.

(5) The three-dimensional display may further include a diffusion member that diffuses a light beam emitted by the light beam controller in a constant angular range. In this case, limitation of the viewing area from where a three-dimensional image can be observed is inhibited.

(6) The spatial light modulator includes a plurality of pixel groups, and each pixel group includes a plurality of pixels, the screen includes a plurality of unit regions respectively corresponding to the plurality of pixel groups, the rearrangement optical element guides light generated by the plurality of pixels in each pixel group to the corresponding unit region of the screen to rearrange a plurality of pixels in each unit region on the screen, the light beam controller includes a lens array having a plurality of lenses respectively corresponding to the plurality of unit regions, and each lens of the lens array emits light generated by the plurality of rearranged pixels in the corresponding unit region of the screen as light beams in respective different directions.

Such a configuration causes the light generated by the plurality of pixels in each pixel group of the spatial light modulator to be guided to the corresponding unit region of the screen. Thus, the plurality of pixels are rearranged in each unit region of the screen. Further, light beams are emitted in a plurality of different directions from the lens corresponding to each unit region of the screen. In this case, because the pixel group of the spatial light modulator and the unit region of the screen correspond to each lens, it is easy to control the spatial light modulator for presenting a three-dimensional image that can be observed from arbitrary viewing area.

[Advantageous Effects of Invention]

The present invention enables effective utilization of a plurality of pixels of a spatial light modulator and improvement of image quality of a three-dimensional image.

[Brief Description of Drawings]

[FIG. 1] Fig. 1 is a schematic perspective view showing a three-dimensional display according to one embodiment of the present invention.
[FIG. 2] Fig. 2 is a schematic side view of the three-dimensional display of Fig. 1.
[FIG. 3] Fig. 3 is an enlarged plan view of part of a light emission surface of a spatial light modulator.
[FIG. 4] Fig. 4 is a plan view of part of a lens array.
[FIG. 5] Fig. 5 is a schematic side view for explaining the configuration and function of a rearrangement optical element.
[FIG. 6] Fig. 6 is a schematic plan view for explaining formation of a rearrangement pixel by the rearrangement optical element.
[FIG. 7] Fig. 7 is a schematic plan view showing a plurality of light beams emitted by one lens.
[FIG. 8] Fig. 8 is a schematic diagram showing one example of the configuration of the rearrangement optical element.
[FIG. 9] Fig. 9 is a schematic diagram showing another example of the configuration of the rearrangement optical element.
[FIG. 10] Fig. 10 is a schematic diagram showing yet another example of the configuration of the rearrangement optical element.
[FIG. 11] Fig. 11 is a schematic plan view for explaining a method of presenting a three-dimensional image.
[FIG. 12] Fig. 12 is a schematic plan view for explaining a principle of generation of binocular disparity in the three-dimensional display according to one embodiment of the present invention.
[FIG. 13] Fig. 13 is a schematic plan view showing another example of the arrangement of the rearrangement pixels by the rearrangement optical element.
[FIG. 14] Fig. 14 is a schematic plan view showing another example of the arrangement of the rearrangement pixels by the rearrangement optical element.
[FIG. 15] Fig. 15 is a schematic plan view showing another example of the arrangement of the rearrangement pixels by the rearrangement optical element.
[FIG. 16] Fig. 16 is a schematic plan view showing another example of the arrangement of the rearrangement pixels by the rearrangement optical element.
[FIG. 17] Fig. 17 is a schematic cross sectional view showing a first specific example of the three-dimensional display of the present invention.
[FIG. 18] Fig. 18 is a schematic diagram for explaining emission directions of light beams in the case where a diffusion plate is disposed above the lens array.
[FIG. 19] Fig. 19 is a schematic side view and a schematic plan view showing a second specific example of the three-dimensional display of the present invention.
[FIG. 20] Fig. 20 is a schematic diagram showing a relationship between a position of a lens and a position of the rearrangement pixel of Fig. 19.
[FIG. 21] Fig. 21 is a schematic diagram for explaining the arrangement of the rearrangement pixel in the second specific example of the three-dimensional display of the present invention.

[FIG. 22] Fig. 22 is a schematic perspective view showing a third specific example of the three-dimensional display of the present invention.

[FIG. 23] Fig. 23 is schematic cross sectional view of the three-dimensional display of the third specific example.

[FIG. 24] Fig. 24 is a schematic plan view showing another example of the arrangement of unit regions of the spatial light modulator, unit regions of the screen and the lenses of the lens array.

[Description of Embodiments]

(1) Configuration of Three-Dimensional Display

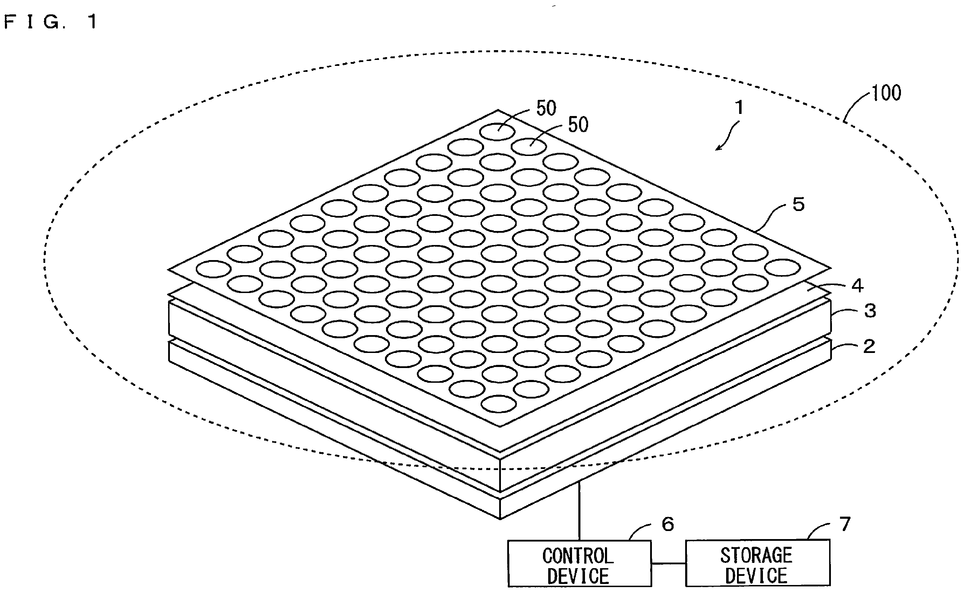

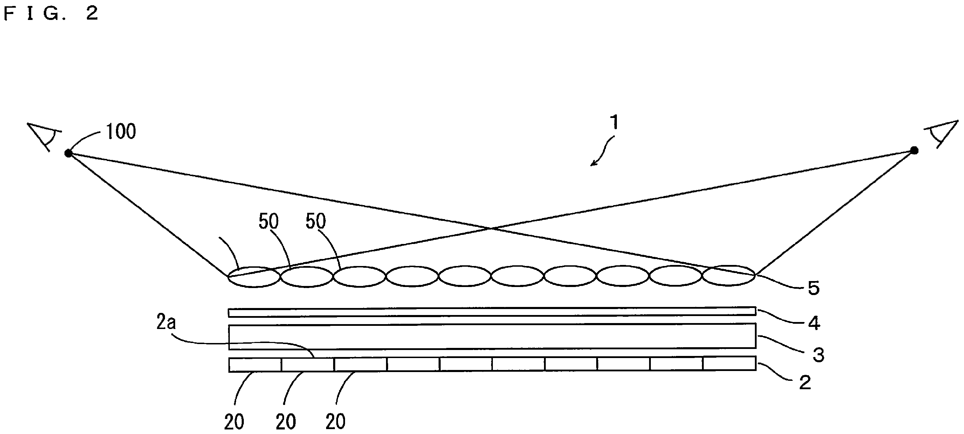

Fig. 1 is a schematic perspective view showing a three-dimensional display according to one embodiment of the present invention. Fig. 2 is a schematic side view of the three-dimensional display of Fig. 1.

As shown in Fig. 1 and Fig. 2, the three-dimensional display 1 is constituted by a laminated structure of a spatial light modulator 2, a rearrangement optical element 3, a screen 4 and a lens array 5.

The spatial light modulator 2 is made of a matrix display element that can present colors in the form of a matrix. This spatial light modulator 2 has a light emission surface 2a in which a plurality of pixels are arranged in the form of a matrix. As the spatial light modulator 2, for example, a liquid crystal display (LCD), an organic electroluminescense (EL) display, a projection image formed of a combination of a projector and a screen can be used. In the present embodiment, as shown in Fig. 2, the light emission surface 2a of the spatial light modulator 2 is sectioned into a plurality of square pixel groups 20. The shape of each pixel group 20 is not limited to a square, and may be a rectangle, a hexagon or another shape, for example. Further, each pixel group 20 may be constituted by pixels in a plurality of dispersively arranged regions.

The screen 4 is disposed in parallel with the light emission surface 2a of the spatial light modulator 2 and at a constant distance from the light emission surface 2a, and the rearrangement optical element 3 is disposed between the light emission surface 2a and the screen 4. The rearrangement optical element 3 is configured to respectively guide the light generated by the plurality of pixels of the spatial light modulator 2 onto the screen 4 to rearrange a plurality of pixels on the screen 4.

Hereinafter, each pixel of the spatial light modulator 2 is referred to as an original pixel, and each pixel rearranged by the rearrangement optical element 3 is referred to as a rearrangement pixel. Configuration of the rearrangement optical element 3 will be described below.

The screen 4 has light-diffusing properties and light-transmitting properties. Thus, the diffused light is generated from each rearrangement pixel. The lens array 5 is disposed in parallel with the screen 4 and at a constant distance from the screen 4.

The lens array 5 is constituted by a plurality of convex lenses (hereinafter simply referred to as a lens) 50 arranged in the form of a matrix. The plurality of lenses 50 are provided to respectively correspond to the plurality of pixel groups 20 of the spatial light modulator 2. Each lens 50 is disposed above the corresponding pixel group 20 of the spatial light modulator 2 to emit the light generated by the plurality of rearrangement pixels on the screen 4 as light beams in respective different directions.

The three-dimensional display 1 is installed such that the lens array 5 is horizontal, for example. In the present embodiment, an annular viewing area 100 surrounding a space above the periphery of the three-dimensional display 1 is set.

As shown in Fig. 1, a control device 6 is connected to the spatial light modulator 2, and a storage device 7 is connected to the control device 6. The storage device 7 is made of a hard disc or a memory card and the like, for example. In the storage device 7, three-dimensional data for presenting a three-dimensional image is stored. The control device 6 is made of a personal computer, for example. The control device 6 controls the spatial light modulator 2 based on three-dimensional data stored in the storage device 7. Thus, a three-dimensional image that can be observed from the viewing area 100 is presented. Here, the three-dimensional image is not limited to a three-dimensional still image, and also includes a three-dimensional moving image.

(2) Configuration of Spatial Light Modulator 2 and Lens Array 5

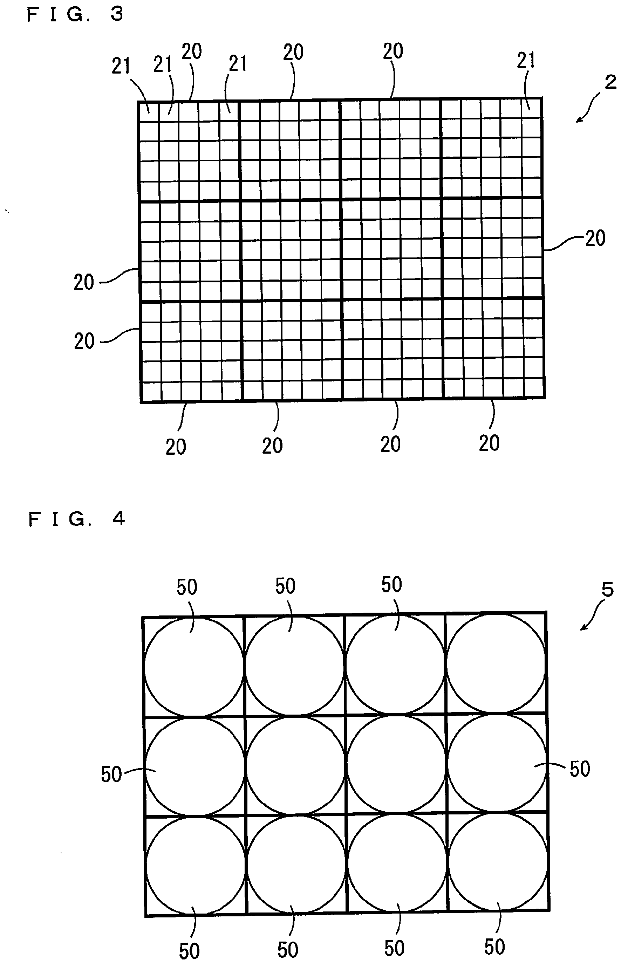

Fig. 3 is a plan view of part of a light emission surface of the spatial light modulator 2. Fig. 4 is an enlarged plan view of part of the lens array 5.

As shown in Fig. 3, in the present embodiment, the light emission surface of the spatial light modulator 2 is sectioned into a plurality of square pixel groups 20. Each pixel group 20 includes a plurality of original pixels 21 arranged in the form of a matrix.

As shown in Fig. 4, the lens array 5 is constituted by the plurality of lenses 50 arranged in the form of a matrix. The plurality of lenses 50 are provided to respectively correspond to the plurality of pixel groups 20 of the spatial light modulator 2 of Fig. 3. Each lens 50 is disposed above the corresponding pixel group 20 of the spatial light modulator 2.

(3) Configuration and Function of Rearrangement Pixels 31

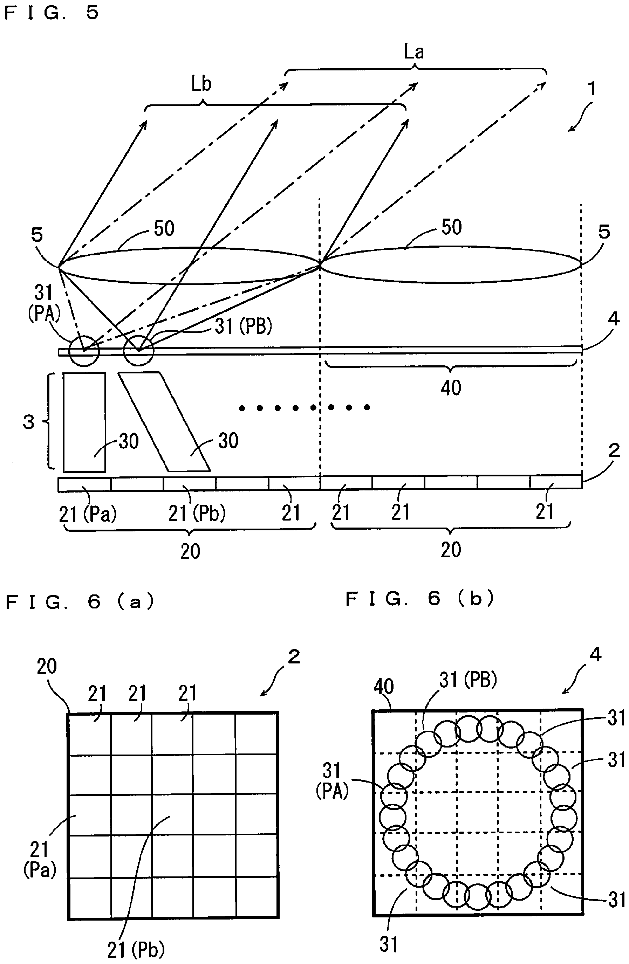

Fig. 5 is a schematic side view for explaining the configuration and function of the rearrangement optical element 3. Fig. 6 is a schematic plan view for explaining the formation of the rearrangement pixels by the rearrangement optical element 3.

As shown in Fig. 5, the rearrangement optical element 3 is constituted by a plurality of light-guiding elements 30. The plurality of light-guiding elements 30 are provided to respectively correspond to the plurality of original pixels 21 of the spatial light modulator 2. The screen 4 is virtually sectioned into a plurality of unit regions 40 respectively corresponding to the plurality of pixel groups 20 of the spatial light modulator 2. Each light-guiding element 30 guides the light generated by the corresponding original pixel 21 to a different position on the screen 4. Thus, each original pixel 21 of the spatial light modulator 2 is rearranged at the different position on the screen 4. As a result, the rearrangement pixel 31 is formed on the screen 4. Parts of the original pixels 21 may be rearranged at the same positions on the screen 4. In the present embodiment, the plurality of original pixels 21 in each pixel group 20 of the spatial light modulator 2 are rearranged as the rearrangement pixels 31 in the corresponding unit region 40 of the screen 4.

For example, a rearrangement pixel 31 (PA) is formed on the screen 4 from an original pixel 21 (Pa) of the spatial light modulator 2 of Fig. 5. Thus, a light beam La indicated by a one-dot and dash arrow is emitted by the lens 50. Further, a rearrangement pixel 31 (PB) is formed on the screen 4 from an original pixel 21 (Pb). Thus, a light beam Lb indicated by a solid arrow is emitted by the lens 50.

As shown in Fig. 6(a), the plurality of original pixels 21 in the pixel group 20 of the spatial light modulator 2 are arranged in the form of a matrix. As shown in Fig. 6(b), the rearrangement pixels 31 in the unit region 40 on the screen 4 are annularly arranged. For example, the original pixel 21 (Pa) of the spatial light modulator 2 is rearranged as the rearrangement pixel 31 (PA) on the screen 4. Further, the original pixel 21 (Pb) of the spatial light modulator 2 is rearranged on the screen 4 as the rearrangement pixel 31 (PB).

In this manner, the plurality of rearrangement pixels 31 can be rearranged on the screen 4 such that the arrangement of the plurality of rearrangement pixels 31 in each unit region 40 of the screen 4 is different from the arrangement of the plurality of original pixels 21 in each pixel group 20 of the spatial light modulator 2. The number of the plurality of original pixels 21 in each pixel group 20 of the spatial light modulator 2 and the number of the plurality of rearrangement pixels 31 (the number of light-guiding elements 30) in each unit region 40 of screen 4 are equal to each other. In this case, the original pixels 21 located at the four corners of each pixel group 20 of the spatial light modulator 2 can also be rearranged as the rearrangement pixels 31 at any positions in the unit region 40 of the screen 4. Therefore, a wasteful original pixel 21 is not generated.

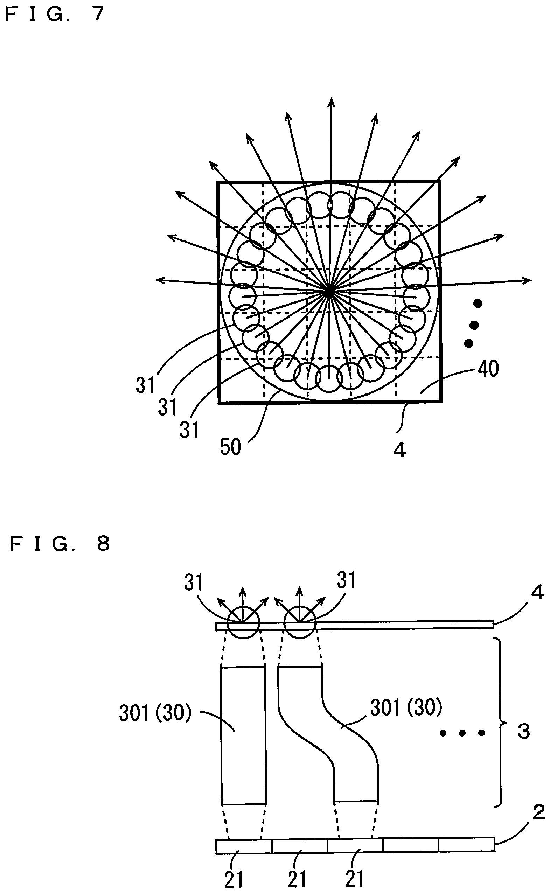

Fig. 7 is a schematic plan view showing a plurality of light beams emitted by one lens 50.

As shown in Fig. 7, the plurality of rearrangement pixels 31 are annularly formed in the unit region 40 of the screen 4 below the one lens 50. As indicated by arrows in Fig. 7, light beams are respectively and obliquely emitted upward and outward through the center of the lens 50 from the plurality of annularly arranged rearrangement pixels 31. The plurality of light beams are respectively set in arbitrary colors. At any position in the viewing area 100 of Fig. 1 and Fig. 2, an observer can view at least one of the plurality of light beams emitted by each of the plurality of lenses 50.

Fig. 8 is a schematic diagram showing one example of the configuration of the rearrangement optical element 3. In the example of Fig. 8, the rearrangement optical element 3 is an optical fiber array made of a plurality of optical fibers 301. In this case, each light-guiding element 30 of the rearrangement optical element 3 is constituted by the optical fiber 301. The light generated by each original pixel 21 of the spatial light modulator 2 is incident on an incident end of each optical fiber 301, propagates in the optical fiber 301, and is emitted from an emission end of the optical fiber 301 onto the screen 4.

Because each optical fiber 301 can be easily bent, the light generated by each original pixel 21 of the spatial light modulator 2 can be easily guided to any position on the screen 4. Further, it is possible to easily guide the light generated by each original pixel 21 of the spatial light modulator 2 to a distant position on the screen 4 by using each optical fiber 301. Therefore, flexibility in arrangement of the rearrangement pixels 31 on the screen 4 is high.

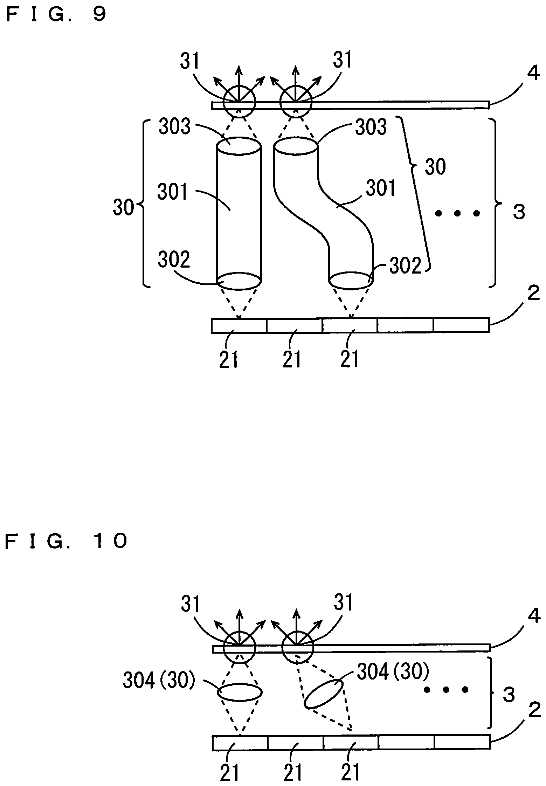

Fig. 9 is a schematic diagram showing another example of the configuration of the rearrangement optical element 3. In the example of Fig. 9, lenses 302, 303 are respectively formed at an incident end and an emission end of each optical fiber 301. The light generated by each original pixel 21 of the spatial light modulator 2 is collected by each lens 301 at the incident end, propagates in each optical fiber 301, and an image is formed on the screen 4 by the lens 303 at the emission end. Thus, the original pixels 21 of the spatial light modulator 2 can be efficiently rearranged as the rearrangement pixels 31 on the screen 4.

Also in the present example, similarly to the example of Fig. 8, because each optical fiber 301 can be easily bent, the light generated by each original pixel 21 of the spatial light modulator 2 can be easily guided to any position on the screen 4. Further, the light generated by each original pixel 21 of the spatial light modulator 2 can be easily guided to a distant position on the screen 4. Therefore, flexibility in arrangement of the rearrangement pixels 31 on the screen 4 is high.

Fig. 10 is a schematic diagram showing yet another example of the configuration of the rearrangement optical element 3. In the example of Fig. 10, the rearrangement optical element 3 is a lens array made of a plurality of lenses 304. In this case, each light-guiding element 30 of the rearrangement optical element 3 is constituted by the lens 304. Each lens 304 is provided to be inclined in correspondence with the position of each rearrangement pixel 31 on the screen 4. The light generated by each original pixel 21 of the spatial light modulator 2 is collected by each lens 304, and an image is formed on the screen 4. In this case, a focal point on the incident side of each lens 304 is preferably located on each original pixel 21 of the spatial light modulator 2, and a focal point on the emission side of each lens 304 is preferably located on the screen 4. Thus, each original pixel 21 of the spatial light modulator 2 can be efficiently rearranged as each rearrangement pixel 31 on the screen 4. Further, it is possible to reduce the thickness of the three-dimensional display 1 by using the lens array as the rearrangement optical element 3.

(4) Method of Presenting Three-Dimensional Image

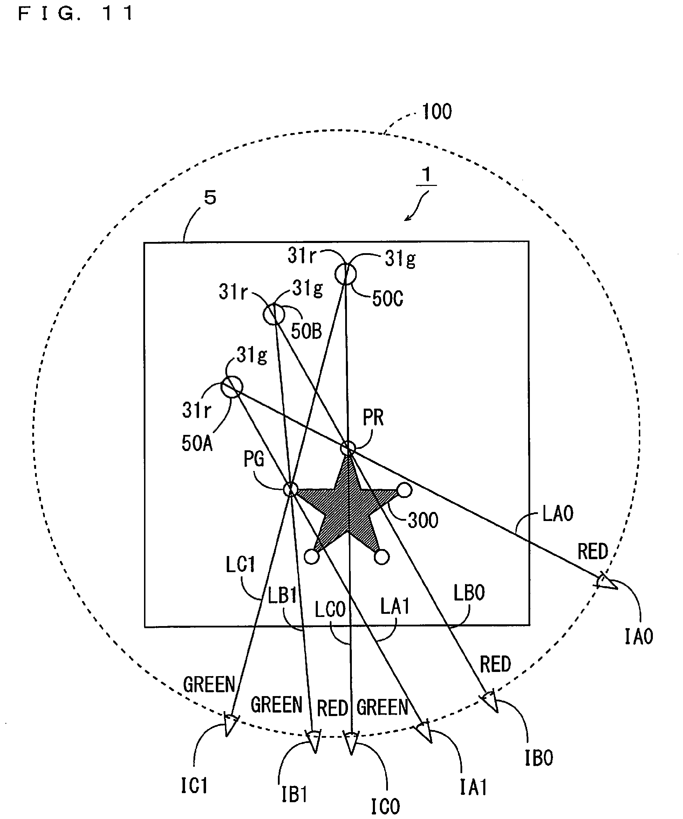

Fig. 11 is a schematic plan view for explaining the method of presenting the three-dimensional image 300. In Fig. 11, three lenses 50A, 50B, 50C are shown as the lens array 5.

For example, in the case where a red point is presented at a position PR, one rearrangement pixel 31r below the lens 50A emits light in red, and a red light beam LA0 is emitted in a direction passing through the position PR by the lens 50A. Further, one rearrangement pixel 31r below the lens 50B emits light in red, and a red light beam LB0 is emitted in a direction passing through the position PR by the lens 50B. Further, one rearrangement pixel 31r below the lens 50C emits light in red, and a red light beam LC0 is emitted in a direction passing through the position PR by the lens 50C.

Thus, a red point light source is presented at an intersection point of the red light beams LA0, LB0, LC0. In this case, in the case where eyes of the observer are at a position IA0, a position IB0, and a position IC0, a red point is viewed at the position PR.

Similarly, in the case where a green point is presented at a position PG, another rearrangement light pixel 31g below the lens 50A emits light in green, and a green light beam LA1 is emitted in a direction passing through the position PG by the lens 50A. Further, another rearrangement pixel 31g below the lens 50B emits light in green, and a green light beam LB1 is emitted in a direction passing through the position PG by the lens 50B. Further, another rearrangement pixel 31g below the lens 50C emits light in green, and a green light beam LC1 is emitted in a direction passing through the position PG by the lens 50C.

Thus, a green point light source is presented at an intersection point of the green light beams LA1, LB1, LC1. In this case, in the case where the eyes of the observer are at a position IA1, a position IB1 and a position IC1, a green point is viewed at the position PG.

In this manner, a light beam in a color to be presented is emitted in a direction passing through each position of the three-dimensional image 300 from each of the plurality of lenses 50A, 50B, 50C of the lens array 5.

Because a person identifies illumination light reflected or diffused at the surface of a real object as an object, the surface of the object can be considered as the collection of point light sources. That is, it is possible to present the three-dimensional image 300 by appropriately reproducing the colors in the positions PR and PG to be the surface of the object by the light beams traveling from the plurality of lenses 50A, 50B, 50C.

The colors of the plurality of light beams and the directions of the plurality of light beams emitted from the plurality of lenses 50, and the colors to be generated by the plurality of original pixels 21 of the spatial light modulator 2 are calculated by the control device 6 based on the three-dimensional data stored in the storage device 7 of Fig. 1. Specifically, the control device 6 finds an intersection point of a three-dimensional plane defined in advance as the three-dimensional data and each light beam, calculates an appropriate color to be supplied to the light beam and the direction of the light beam, and finds the lens 50 to emit the light beam and the rearrangement element 31 to generate light in the color. Further, the control device 6 reversely traces the light-guiding element 30 that guides the light to the rearrangement pixel 31 and finds the corresponding original pixel 21 of the spatial light modulator 2. The control device 6 controls the spatial light modulator 2 based on a result of calculation regarding the plurality of light beams. Thus, the plurality of light beams respectively having the set colors are emitted from the plurality of lens 50 such that the three-dimensional image 300 is presented.

Even in the case where there is not three-dimensional data showing a three-dimensional shape, it is possible to acquire the information regarding a plurality of light beams by picking up an image of an actual object using a camera. For example, it is possible to acquire the color of the light beam LA0 travelling from the position PR of the real object by disposing the real object at the position of the three-dimensional image 300 of Fig. 11 and picking up an image of the real object at the position IA0 by the camera.

The observer can view the same three-dimensional image 300 in respective different directions at different positions on the viewing area 100.

(5) Principle of Generation of Binocular Disparity

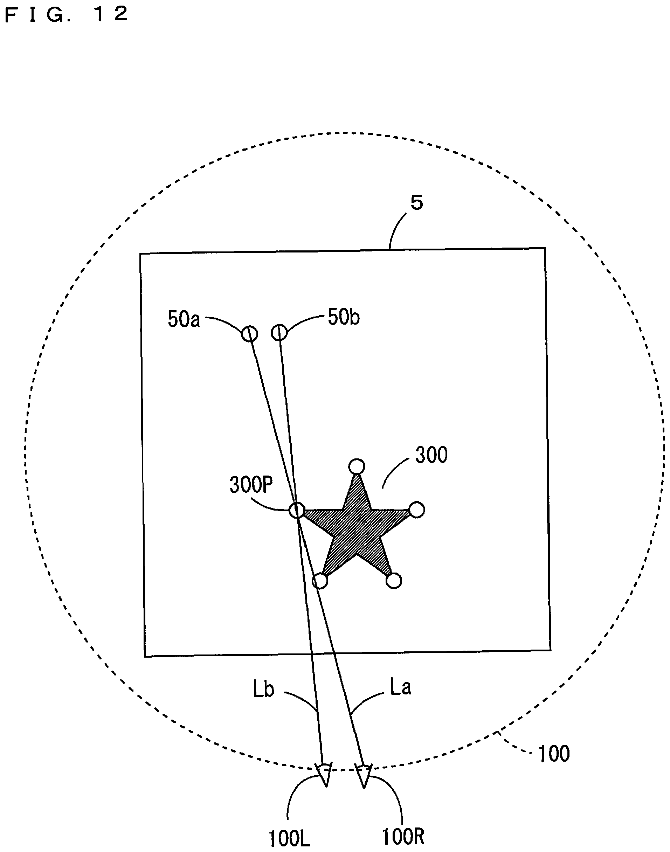

Fig. 12 is a schematic plan view for explaining the principle of generation of the binocular disparity in the three-dimensional display 1 according to the one embodiment of the present invention. In Fig. 12, a light beam La emitted by a lens 50a is incident on a right eye 100R, and a light beam Lb emitted by a lens 50b is incident on a left eye 100L. Colors of the light beams La, Lb are equal to each other. Therefore, the color of the light beam La viewed by the right eye 100R and the color of the light beam Lb viewed by the left eye 100L are equal to each other. For example, in the case where the real object has luster, the color of one point of the real object is different depending on a viewing direction. In such a case, different colors are respectively supplied to the light beam La and the light beam Lb.

One point 300P that constitutes the three-dimensional image 300 is formed at an intersection point of the light beam La and the light beam Lb. The point 300P can be considered as a virtual point light source. In this case, a direction in which the right eye 100R views the point 300P and a direction in which the left eye 100L views the point 300P are different from each other. That is, there is a convergence angle between a direction of the line-of-sight of the right eye 100R and a direction of the line-of-sight of the left eye 100L. Thus, stereoscopic vision of an image formed by a plurality of light beams is possible.

(6) Effects of Present Embodiment

With reference to Figs. 5 and 6, in the three-dimensional display 1 according to the present embodiment, a three-dimensional image that can be observed from the annular viewing area 100 surrounding the three-dimensional display 1 is presented. In this case, the rearrangement pixels 31 are annularly rearranged in each unit region 40 of the screen 4. Thus, the plurality of original pixels 21 of the spatial light modulator 2 can be effectively utilized for presenting the three-dimensional image without waste. Further, angular intervals between the plurality of light beams emitted by the lens 50 on each unit region 40 of the screen 4 can be equal to one another. Further, the plurality of rearrangement pixels 31 can be arranged in part of the region with high density. Therefore, the image quality of the three-dimensional image is improved.

(7) Other Examples of Arrangement of Rearrangement Pixels 31

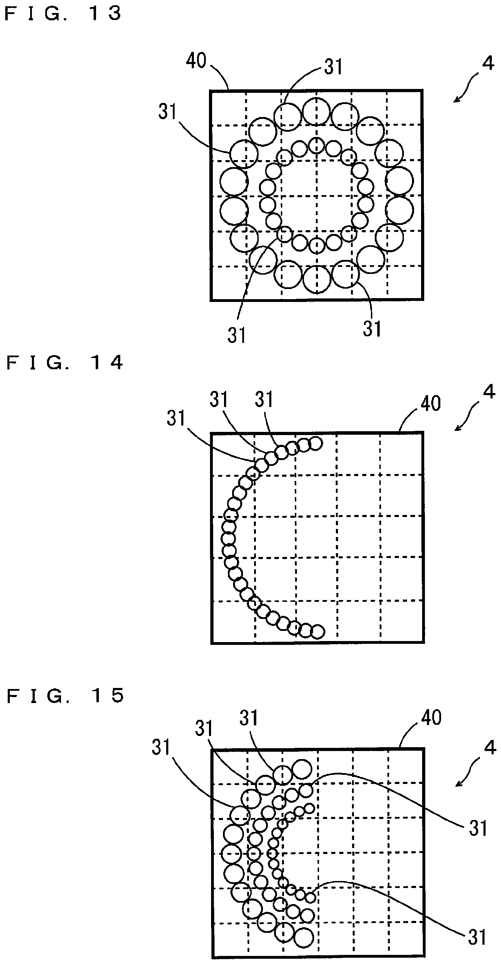

Figs. 13 to 16 are schematic plan views showing other examples of the arrangement of the rearrangement pixels by the rearrangement optical element 3.

In the example of Fig. 13, the plurality of rearrangement pixels 31 in the unit region 40 on the screen 4 are arranged in a double-annular shape. In this case, the three-dimensional image having vertical disparity in addition to the binocular disparity can be presented. The plurality of rearrangement pixels 31 may be arranged in the shape of triple-annulus or more in the unit region 40.

In the example of Fig. 14, the plurality of rearrangement elements 31 in the unit region 40 of the screen 4 are arranged in a circular arc shape such as semicircular or partial circular. The example of Fig. 14 is used in the case where the viewing area 100 is limited to a specific angular range. In this case, the density with which the plurality of rearrangement elements 31 are arranged in each unit region 40 can be increased.

In the example of Fig. 15, the plurality of rearrangement pixels 31 in the unit region 40 of the screen 4 are arranged in a triple circular arc shape or a form of a sector. The example of Fig. 15 is used in the case where the viewing area 100 is limited to a specific angular range and a three-dimensional image having vertical disparity is presented.

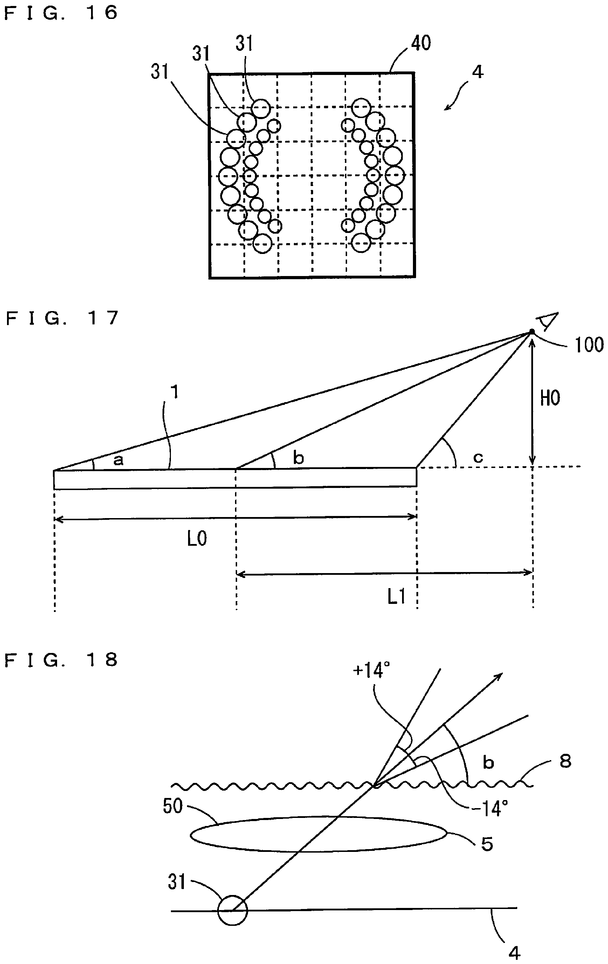

In the example of Fig. 16, the plurality of rearrangement pixels 31 in the unit region 40 on the screen 4 are arranged in two sets of a double circular arc shape or two sets of a form of a sector. The example of Fig. 16 is used in the case where the viewing area 100 is limited to a specific angular range at two locations and a three-dimensional image having vertical disparity is presented. The plurality of rearrangement pixels 31 may be dispersed to regions at three or more locations.

A method of rearranging the rearrangement pixels 31 by the rearrangement optical element 3 is not limited to the above-mentioned examples. For example, the plurality of rearrangement pixels 31 may be arranged in an elliptical shape, a polygonal shape or any other shapes in the unit region 40. Alternatively, the plurality of rearrangement pixels 31 may be densely arranged in a circular region.

(8) First Specific Example of Three-Dimensional Display 1

Fig. 17 is a schematic cross sectional view showing the first specific example of the three-dimensional display 1 of the present invention. The three-dimensional display 1 of the present example is square. In Fig. 17, a cross section along a diagonal line of the three-dimensional display 1 is shown. As shown in Fig. 17, the length of the diagonal line of the three-dimensional display 1 is L0, and the horizontal distance from the center of the three-dimensional display 1 to the viewing area 100 is L1. The height from the surface of the lens array 5 of the three-dimensional display 1 to the viewing area 100 is H0.

Further, an angle formed by a line of sight extending from the viewing area 100 towards a distant corner of the three-dimensional display 1 with a horizontal plane is 'a', an angle formed by a line of sight extending from the viewing area 100 towards the center of the three-dimensional display 1 with the horizontal plane is 'b', and an angle formed by a line of sight extending from the viewing area 100 towards a close corner of the three-dimensional display 1 with the horizontal plane is 'c'.

In the present example, the length L0 of the diagonal line of the three-dimensional display 1 is 40 cm, and the length of one side is about 28 cm. The diameter of each lens 50 is about 0.71 mm, and the length of one side of each pixel group 20 of the spatial light modulator 2 is about 0.71 mm. The lens 50 is arranged in 400 rows x 400 columns. Each pixel group 20 is constituted by 400 original pixels 21 arranged in 20 rows x 20 columns. In this case, light beams are emitted in 400 directions from each lens 50. The size of each original pixel 21 is 35 $\mu$m in length x 35 $\mu$m in width. The spatial light modulator 2 is constituted by 8000 x 8000 pixels.

The case where the horizontal distance L1 from the center of the three-dimensional display 1 to the viewing area 100 is 50 cm, and the height H0 from the surface of the lens array 5 of the three-dimensional display 1 to the viewing area 100 is 35 cm is considered.

The angles a, b, c are calculated as the following formulas.

$$a = \tan^{-1}(35/(20+50)) = 27\ [°]$$

$$b = \tan^{-1}(35/50) = 35\ [°]$$

$$\underline{c} = \tan^{-1}(35/(20-50)) = 49\ [°]$$

In this case, it is necessary to emit a light beam in a direction from 27° to 49° from the lens array 5 of the three-dimensional display 1. A diffusion plate is disposed above the lens array 5.

Fig. 18 is a schematic diagram for explaining emission directions of the light beams in the case where the diffusion plate 8 is disposed above the lens array 5.

As shown in Fig. 18, the lens 50 obliquely emits a light beam upward at an angle b (=35°) with respect to the horizontal plane as indicated by arrow. The diffusion plate 8 is formed to diffuse the light beam in a range of 28°. Thus, the light beam is diffused in the range from 21° to 49°. Therefore, the observer can view the light beam emitted from the lens 50 of the entire region of the three-dimensional display 1 from the viewing area 100.

(9) Second Specific Example of Three-Dimensional Display 1

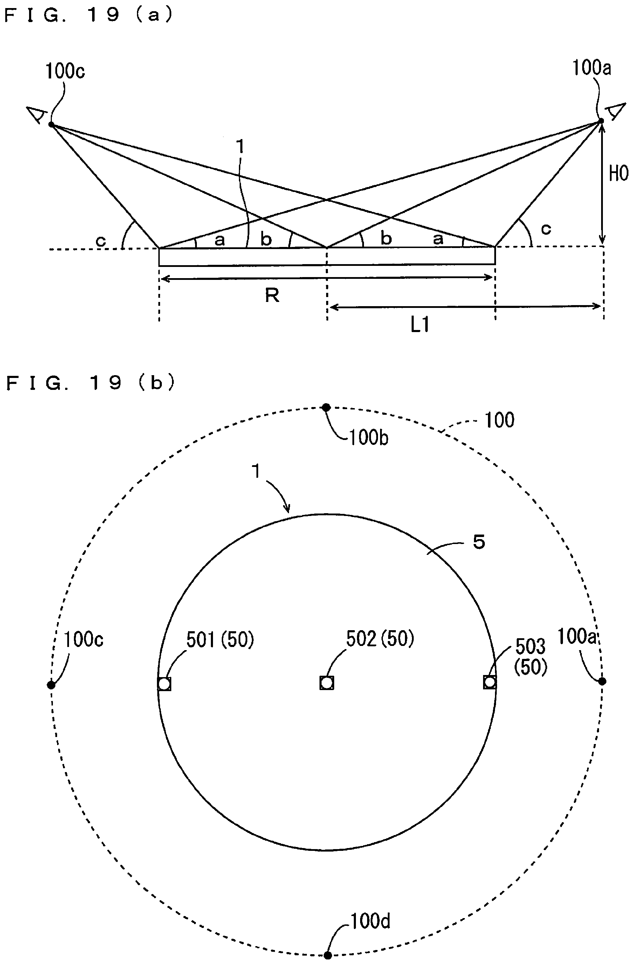

Figs. 19(a) and 19(b) are a schematic side view and a schematic plan view showing the second specific example of the three-dimensional display 1 of the present invention.

As shown in Fig. 19(b), the three-dimensional display 1 is circular. As shown in Fig. 19(a), the diameter of the three-dimensional display 1 is R, and the horizontal distance from the center of the three-dimensional display 1 to the viewing area 100 is L1. The height from the surface of the lens array 5 of the three-dimensional display 1 to the viewing area 100 is H0.

In the present example, the diameter R of the three-dimensional display 1 is 40 cm. Further, the angle 'a' formed by a line of sight extending from the viewing area 100 towards the distant end of the three-dimensional display 1 is 27°. The angle 'b' formed by a line of sight extending from the viewing area 100 to the center of the three-dimensional display 1 is 35°. The angle 'c' formed by a line of sight extending from the viewing area 100 to the close end of the three-dimensional display 1 is 49°.

Here, the case where the observer is located at positions 100a, 100b, 100c, 100d of the viewing area 100 is considered. The positions 100a, 100b, 100c, 100d are spaced apart from one another by 90° with respect to the center of the three-dimensional display 1.

The lens 50 that is the most distant from the position 100a is referred to as a lens 501, the lens 50 located at the center of the three-dimensional display 1 is referred to as a lens 502, and the lens 50 that is closest to the position 100a is referred to as a lens 503.

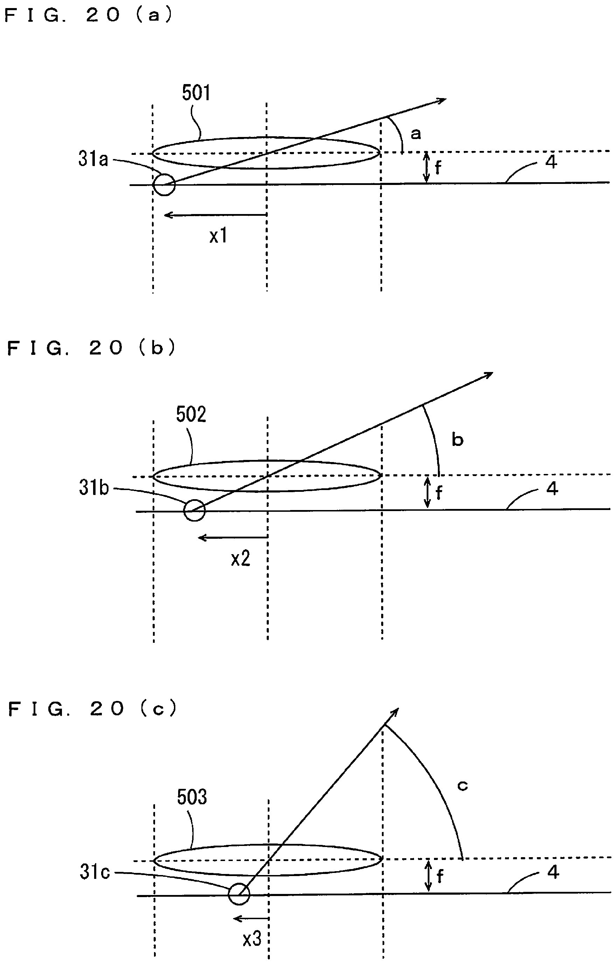

Fig. 20 is a schematic diagram showing a relationship between the positions of the lenses 501, 502, 503 of Fig. 19 and the positions of the rearrangement pixels 31. In Fig. 20, one rearrangement pixel 31 corresponding to the lens 501 of Fig. 19 is referred to as a rearrangement pixel 31a, one rearrangement pixel 31 corresponding to the lens 502 is referred to as a rearrangement pixel 31b, and one rearrangement pixel 31 corresponding to the lens 503 is referred to as a rearrangement pixel 31c.

As shown in Fig. 20(a), the rearrangement pixel 31a is arranged such that the light beam emitted by the lens 501 forms the angle 'a' with the horizontal plane. In this case, the rearrangement pixel 31a is outwardly spaced apart from the center axis of the lens 501 by a distance x1. As shown in Fig. 20(b), the rearrangement pixel 31b is arranged such that the light beam emitted by the lens 502 forms the angle 'b' with the horizontal plane. In this case, the rearrangement pixel 31b is outwardly spaced apart from the center axis of the lens 502 by a distance x2. As shown in Fig. 20(c), the rearrangement pixel 31c is arranged such that the light beam emitted by the lens 503 forms an angle 'c' with the horizontal plane. In this case, the rearrangement pixel 31c is outwardly spaced apart from the center axis of the lens 503 by a distance x3.

When letting a focal distance of each lens 501 to 503 be f, each distance x1, x2, x3 can be found by following each formula.

$$\tan(f/x1) = a$$

$$\tan(f/x2) = b$$

$$\tan(f/x3) = c$$

Letting the focal distance f be 0.22 mm, and letting the angles a, b, c be 27°, 35°, 49°, respectively, the distance x1 is 0.5 mm, the distance x2 is 0.4 mm, and the distance x3 is 0.31 mm.

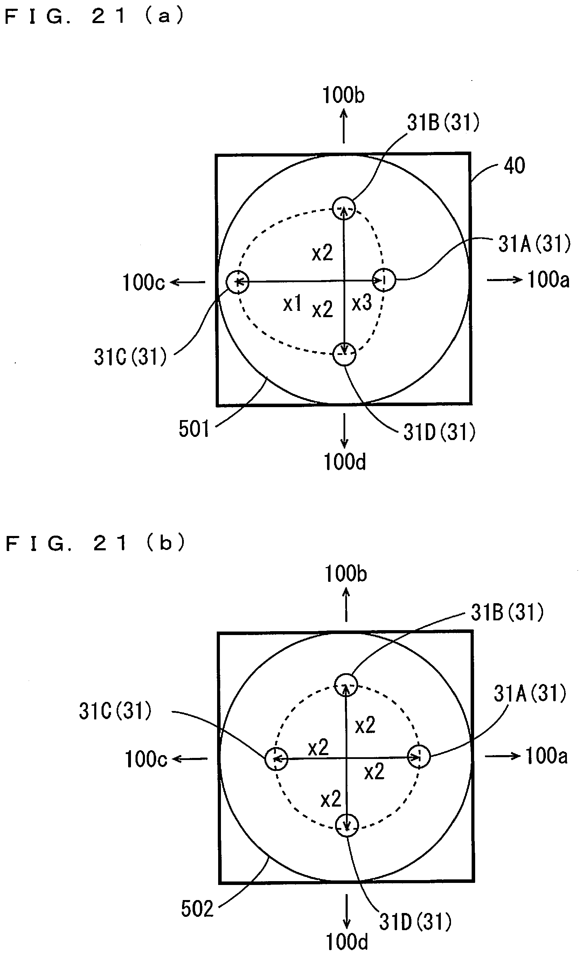

Fig. 21 is a schematic diagram for explaining the arrangement of the rearrangement pixels 31 in the second specific example of the three-dimensional display of the present invention. Fig. 21(a) shows the arrangement of the rearrangement pixels 31 below the lens 501 of Fig. 19(b), and Fig. 21(b) shows the arrangement of the rearrangement pixels 31 below the lens 502 of Fig. 19(b).

In Fig. 21(a), the four rearrangement pixels 31 are referred to as respectively rearrangement pixels 31A, 31B, 31C, 31D. The rearrangement pixel 31A is arranged at a position spaced apart from the central axis of the lens 501 by the distance x3 in a direction moving towards the position 100a. The rearrangement pixel 31B is arranged at a position spaced apart from the center axis of the lens 501 by a distance x2 in a direction moving towards the position 100b. The rearrangement pixel 31C is arranged at a position spaced apart from the center axis of the lens 501 by the distance x1 in a direction moving towards the position 100c. The rearrangement pixel 31D is arranged at a position spaced apart from the center axis of the lens 501 by the distance x2 in a direction moving towards the position 100d.

In this case, the plurality of rearrangement pixels 31 corresponding to the lens 501 are arranged in a modified annular shape. Thus, light beams can be respectively emitted to the positions 100a, 100b, 100c, 100d in the viewing area 100 by the lens 501.

In Fig. 21(b), the four rearrangement pixels 31 are respectively rearrangement pixels 31A, 31B, 31C, 31D. The rearrangement pixels 31A, 31B, 31C, 31D are arranged at positions respectively spaced apart from a center axis of a lens 502 by the distance x2 in directions moving towards the positions 100a, 100b, 100c, 100d.

In this case, the plurality of rearrangement pixels 31 corresponding to the lens 502 are annularly arranged. Thus, light beams can be respectively emitted to the positions 100a, 100b, 100c, 100d in the viewing area 100 by the lens 502.

In this manner, light beams can be emitted from each lens 50 to the entire viewing area 100 by adjustment of the arrangement of the plurality of rearrangement pixels 31 in each unit region 40 corresponding to each lens 50 of the lens array 5 based on the angle of the light beam directed to the viewing area 100.

(10) Third Specific Example of Three-Dimensional Display 1

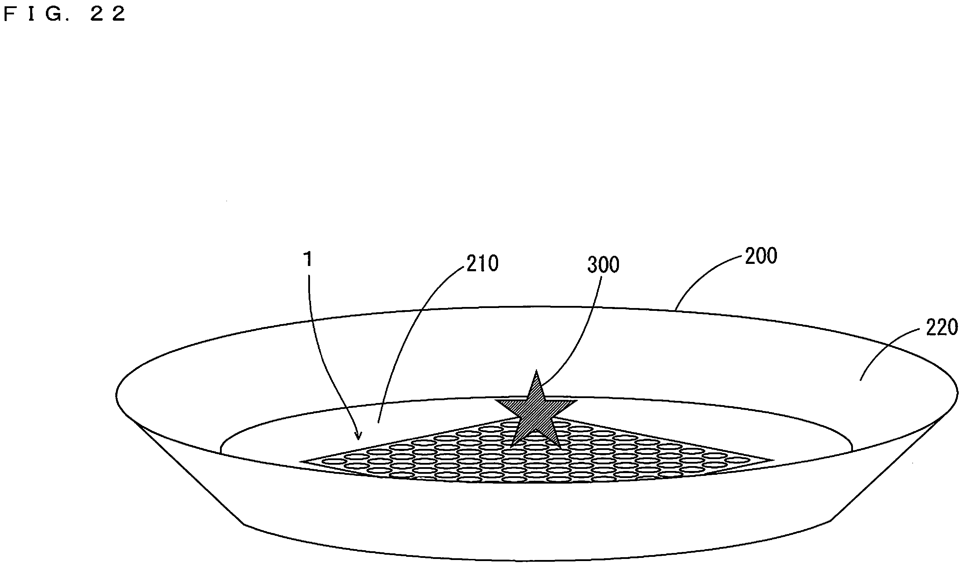

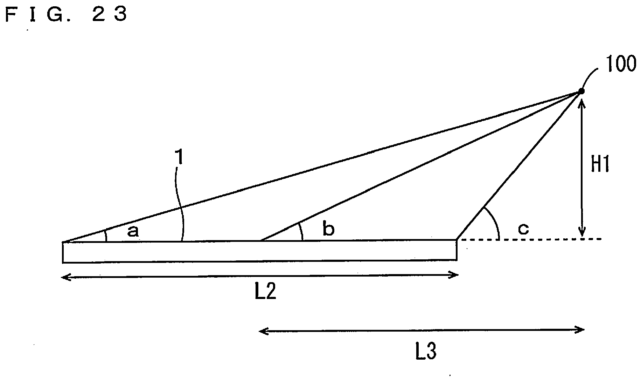

Fig. 22 is a schematic perspective view showing the third specific example of the three-dimensional display 1 of the present invention. Fig. 23 is a schematic cross sectional view of the three-dimensional display 1 of the third specific example. The three-dimensional display 1 of the present example is installed on the ground 210 of a stadium 200 such as a soccer stadium. An auditorium 220 is provided around the ground 210 of the stadium 200. A three-dimensional image 300 is presented above the ground 210 by the three-dimensional display 1. An observer observes the three-dimensional image 300 from the auditorium 220.

As shown in Fig. 22, the three-dimensional display 1 is square. In Fig. 23, a cross section along a diagonal line of this three-dimensional display 1 is shown.

As shown in Fig. 23, the length of the diagonal line of the three-dimensional display 1 is L2, and the horizontal distance from the center of the three dimensional display 1 to the viewing area 100 is L3. The height from the surface of the lens array 5 of the three-dimensional display 1 to the viewing area 100 is H1.

In the present example, the length L2 of the diagonal line of the three-dimensional display 1 is 100 m, and the length of one side is about 71 m. The diameter of each lens 50 is 3.5 cm, and the length of one side of each pixel group 20 of the spatial light modulator 2 is 3.5 cm. The lenses 50 are arranged in 2000 rows x 2000 columns. Each pixel group 20 is constituted by 100 original pixels 21 arranged in 10 rows x 10 columns. In this case, light beams are emitted in 100 directions from each lens 50. The size of each original pixel 21 is 3.5 mm in length x 3.5 mm in width. The three-dimensional display 1 is constituted by 20000 x 20000 pixels.

The case where the horizontal distance L3 from the center of the three-dimensional display 1 to the viewing area 100 is 100 m, and the height H0 from the surface of the lens array 5 of the three-dimensional display 1 to the viewing area 100 is from 20 m to 40 m is considered.

In the case where the height H1 of the viewing area 100 is 20 m, the angles a, b, c are calculated to be 7.6o, 11o, 22o, respectively. In the case where the height H1 of the viewing area 100 is 30 m, the angles a, b, c are calculated to be 11o, 16.7o and 31o, respectively. In the case where the height H1 of the viewing area 100 is 40 m, the angles a, b, c are calculated to be 15o, 22o and 38.7o, respectively.

In the present example, similarly to the first specific example, the observer can view the light beams emitted from the lenses 50 of the entire region of the three-dimensional display 1 from the height from 20 m to 40 m of the auditorium 220 by disposal of the diffusion plate 8 above the lens array 5.

(11) Other Embodiments

While the lens array 5 having the plurality of lenses 50 are used as a light beam controller in the above-mentioned embodiment, the present invention is not limited to this. A pinhole array having a plurality of pinholes or a diffraction grating array having a plurality of diffraction gratings may be used as the light beam controller.

Further, while the pixel groups 20 of the spatial light modulator 2, the unit regions 40 of the screen 4, and the lenses 50 of the lens array 5 are arranged in the form of a matrix in the above-mentioned embodiment, the present invention is not limited to this.

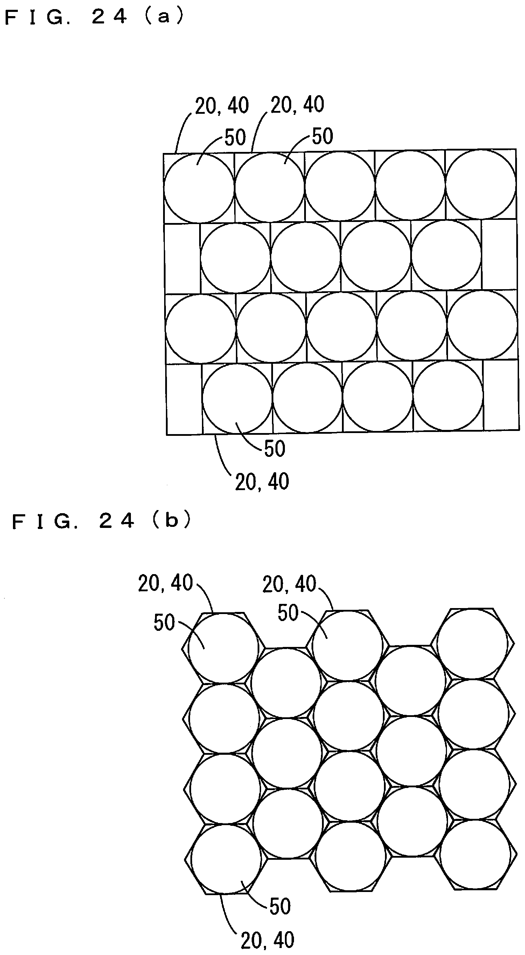

Figs. 24(a) and 24(b) are schematic plan views showing other examples of the arrangement of the pixel groups 20 of the spatial light modulator 2, the unit regions 40 of the screen 4, and the lenses 50 of the lens array 5.

In the example of Fig. 24(a), the pixel groups 20, the unit regions 40 and the lenses 50 in adjacent arrows are arranged to shift by a half of the unit region (by a half of the lens) from one another.

In the example of Fig. 24(b), the pixel group 20 and the unit region 40 are hexagonal, and the pixel groups 20, the unit regions 40 and the lenses 50 are arranged in a hexagonal pattern.

(12) Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the present embodiment, the spatial light modulator 2 is an example of a spatial light modulator, the plurality of original pixels 21 are an example of a plurality of pixels of a spatial light modulator, the screen 4 is an example of a screen, and the rearrangement optical element 3 is an example of a rearrangement optical element. The lens array 5 is an example of a light beam controller or a lens array, the plurality of rearrangement pixels 31 an example of a plurality of rearranged pixels, and the control device 6 is an example of control means.

Further, the light-guiding element 30, the optical fiber 301, and the lens 304 are examples of a light-guiding element, the diffusion plate 8 is an example of a diffusion member, and the lens 50 is an example of a lens.

Further, the pixel group 20 is an example of a pixel group, and the unit region 40 is an example of a unit region.

As each of constituent elements recited in the claims, various other elements having configurations or functions described in the claims can be also used.

[Industrial Applicability]

The present invention can be utilized as a three-dimensional display that presents various types of three-dimensional images.

**Claims**

1. A three-dimensional display (1) comprising:

   a spatial light modulator (2) constituted by a plurality of pixels that generate light;
   a screen (4) that has light-diffusing properties and light-transmitting properties and is disposed at a distance from the spatial light modulator;
   a rearrangement optical element (3) that is disposed between the spatial light modulator and the screen, and guides the light generated by the plurality of pixels of the spatial light modulator onto the screen to rearrange a plurality of pixels on the screen;
   a light beam controller that respectively controls directions of light generated by the plurality of rearranged pixels on the screen to emit a plurality of light beams; and
   control means (6) for controlling the spatial light modulator such that a three-dimensional image is presented by the plurality of light beams emitted by the light beam controller
   wherein:

      the spatial light modulator includes a plurality of pixel groups (20), and each pixel group includes a plurality of pixels,
      the screen includes a plurality of unit regions (40) respectively corresponding to the plurality of pixel groups,
      the rearrangement optical element guides light generated by the plurality of pixels in each pixel group to the corresponding unit region of the screen to rearrange a plurality of pixels in each unit region on the screen such that the plurality of rearranged pixels (31) within each unit are arranged in a shape that includes an annular shape, a circular shape, an arc shape, an elliptical shape, a form of sector, a polygonal shape or a modified annular shape on the screen,
      the light beam controller includes a lens array (5) having a plurality of lenses (50) respectively corresponding to the plurality of unit regions, a pinhole array having a plurality of pinholes respectively corresponding to the plurality of unit regions or a diffraction grating array having a plurality of diffraction gratings respectively corresponding to the plurality of unit regions, and each lens of the lens array, each pinhole of the pinhole array or each diffraction grating of the diffraction grating array emits light generated by the plurality of rearranged pixels in the corresponding unit region of the screen as light beams in respective different directions.

2. The three-dimensional display according to claim 1, wherein
the rearrangement optical element includes a plurality of light-guiding elements (30, 301, 304) that respectively guide the light generated by the plurality of pixels of the spatial light modulator onto the screen.

3. The three-dimensional display according to claim 2, wherein
each of the plurality of light-guiding elements includes an optical fiber (301).

4. The three-dimensional display according to claim 2 or 3, wherein
each of the plurality of light-guiding elements includes a lens (304).

**5.** The three-dimensional display according to any one of claims 1 to 4, further comprising a diffusion member (8) that diffuses a light beam emitted by the light beam controller in a constant angular range.

## Patentansprüche

**1.** Dreidimensionale Anzeige (1), umfassend:

einen räumlichen Lichtmodulator (2), der sich aus einer Vielzahl von Pixeln zusammensetzt, die Licht erzeugen;
einen Bildschirm (4), der lichtstreuende Eigenschaften und lichtdurchlässige Eigenschaften aufweist, und in einem Abstand vom räumlichen Lichtmodulator angeordnet ist;
ein optisches Umordnungselement (3), das zwischen dem räumlichen Lichtmodulator und dem Bildschirm angeordnet ist, und das das von der Vielzahl von Pixeln des räumlichen Lichtmodulators erzeugte Licht auf den Bildschirm leitet, um die Vielzahl von Pixeln auf dem Bildschirm umzuordnen;
eine Lichtstrahlsteuerungseinheit, die jeweils Richtungen von Licht, das von der Vielzahl von umgeordneten Pixeln erzeugt wird, auf dem Bildschirm steuert, um eine Vielzahl von Lichtstrahlen zu emittieren; und
ein Steuerungsmittel (6) zum Steuern des räumlichen Lichtmodulators derart, dass ein dreidimensionales Bild von der Vielzahl von Lichtstrahlen, die von der Lichtstrahlsteuerungseinheit emittiert werden, präsentiert wird,
wobei der räumliche Lichtmodulator eine Vielzahl von Pixelgruppen (20) umfasst, und jede Pixelgruppe eine Vielzahl von Pixeln umfasst,
wobei der Bildschirm eine Vielzahl von Einheitszonen (40) umfasst, die jeweils der Vielzahl von Pixelgruppen entsprechen,
wobei das optische Umordnungselement das in jeder Pixelgruppe von der Vielzahl von Pixeln erzeugte Licht in die jeweilige Einheitszone des Bildschirms leitet, um eine Vielzahl von Pixeln in jeder Einheitszone auf dem Bildschirm derart umzuordnen, dass die Vielzahl von umgeordneten Pixeln (31) innerhalb jeder Einheit in einer Form angeordnet sind, die eine Ringform, eine Kreisform, eine Bogenform, eine Ellipsenform, eine Sektorform, eine Vieleckform oder eine modifizierte Ringform auf dem Bildschirm umfasst,
wobei die Lichtstrahlensteuerungseinheit eine Linsenanordnung (5), die eine Vielzahl von Linsen (50) aufweist, die jeweils der Vielzahl von Einheitszonen entsprechen, eine Lochblendenanordnung, die eine Vielzahl von Lochblenden aufweist, die jeweils der Vielzahl von Einheitszonen entsprechen, oder eine Beugungsgitteranordnung, die eine Vielzahl von Beugungsgittern aufweist, die jeweils der Vielzahl von Einheitszonen entsprechen, umfasst, und
wobei jede Linse der Linsenanordnung, jede Lochblende der Lochblendenanordnung oder jedes Beugungsgitter der Beugungsgitteranordnung das von der Vielzahl von umgeordneten Pixeln erzeugte Licht in der jeweiligen Einheitszone des Bildschirms als Lichtstrahlen in jeweilig unterschiedliche Richtungen emittiert.

**2.** Dreidimensionale Anzeige gemäß Anspruch 1, wobei
das optische Umordnungselement eine Vielzahl von Lichtleitelementen (30, 301, 304) umfasst, die jeweils das von der Vielzahl von Pixeln des räumlichen Lichtmodulators erzeugte Licht auf den Bildschirm leiten.

**3.** Dreidimensionale Anzeige gemäß Anspruch 2, wobei
jedes aus der Vielzahl von Lichtleitelementen eine Lichtleitfaser (301) umfasst.

**4.** Dreidimensionale Anzeige gemäß Anspruch 2 oder 3, wobei jedes aus der Vielzahl von Lichtleitelementen eine Linse (304) umfasst.

**5.** Dreidimensionale Anzeige gemäß einem der Ansprüche 1 bis 4, ferner umfassend ein Streuelement (8), das einen von der Lichtstrahlsteuerungseinheit emittierten Lichtstrahl in einem konstanten Winkelbereich streut.

## Revendications

**1.** Dispositif d'affichage tridimensionnel (1) comprenant :

un modulateur spatial de lumière (2) constitué d'une pluralité de pixels qui génèrent de la lumière ;
un écran (4) qui a des propriétés de diffusion de lumière et des propriétés de transmission de lumière et est disposé à une distance du modulateur spatial de lumière ;
un élément optique de réagencement (3) qui est disposé entre le modulateur spatial de lumière et l'écran, et guide la lumière générée par la pluralité de pixels du modulateur spatial de lumière sur l'écran pour réagencer une pluralité de pixels sur l'écran ;
un contrôleur de faisceaux de lumière qui contrôle respectivement les directions de la lumière générée par la pluralité de pixels réagencés sur l'écran pour émettre une pluralité de faisceaux de lumière ; et

des moyens de commande (6) pour commander le modulateur spatial de lumière de telle sorte qu'une image tridimensionnelle est présentée par la pluralité de faisceaux de lumière émis par le contrôleur de faisceaux de lumière,
dans lequel
le modulateur spatial de lumière comprend une pluralité de groupes de pixels (20), et chaque groupe de pixels comprend une pluralité de pixels,
l'écran comprend une pluralité de régions unitaires (40) correspondant respectivement à la pluralité de groupes de pixels,
l'élément optique de réagencement guide la lumière générée par la pluralité de pixels dans chaque groupe de pixels vers la région unitaire correspondante pour réagencer une pluralité de pixels dans chaque région unitaire sur l'écran de telle sorte que la pluralité de pixels réagencés (31) à l'intérieur de chaque unité sont agencés en une forme qui comprend une forme annulaire, une forme circulaire, une forme arquée, une forme elliptique, une forme de secteur, une forme polygonale ou une forme annulaire modifiée sur l'écran,
le contrôleur de faisceaux de lumière comprend un ensemble de lentilles (5) ayant une pluralité de lentilles (50) correspondant respectivement à la pluralité de régions unitaires, un réseau de trous d'épingle ayant une pluralité de trous d'épingle correspondant respectivement à la pluralité de régions unitaires ou un ensemble de réseaux de diffraction ayant une pluralité de réseaux de diffraction correspondant respectivement à la pluralité de régions unitaires, et chaque lentille de l'ensemble de lentilles, chaque trou d'épingle de l'ensemble de trous d'épingle ou chaque réseau de diffraction de l'ensemble de réseaux de diffraction émet la lumière générée par la pluralité de pixels réagencés dans la région unitaire correspondante de l'écran en tant que faisceaux de lumière dans des directions différentes respectives.

2. Dispositif d'affichage tridimensionnel selon la revendication 1, dans lequel
l'élément optique de réagencement comprend une pluralité d'éléments de guidage de lumière (30, 301, 304) qui guident respectivement la lumière générée par la pluralité de pixels du modulateur spatial de lumière sur l'écran.

3. Dispositif d'affichage tridimensionnel selon la revendication 2, dans lequel
chacun de la pluralité d'éléments de guidage de lumière comprend une fibre optique (301).

4. Dispositif d'affichage tridimensionnel selon la revendication 2 ou 3, dans lequel
chacun de la pluralité d'éléments de guidage de lumière comprend une lentille (304).

5. Dispositif d'affichage tridimensionnel selon l'une quelconque des revendications 1 à 4, comprenant en outre un élément de diffusion (8) qui diffuse un faisceau de lumière émis par le contrôleur de faisceaux de lumière dans une plage angulaire constante.

F I G. 1

FIG. 2

FIG. 3

FIG. 4

FIG. 5

FIG. 6 (a)　　　　　　　FIG. 6 (b)

F I G. 7

F I G. 8

F I G. 9

F I G. 1 0

FIG. 11

F I G. 1 2

FIG. 13

FIG. 14

FIG. 15

F I G. 1 6

F I G. 1 7

F I G. 1 8

F I G. 1 9 (a)

F I G. 1 9 (b)

FIG. 20 (a)

FIG. 20 (b)

FIG. 20 (c)

FIG. 21 (a)

FIG. 21 (b)

FIG. 22

EP 3 070 512 B1

F I G. 2 3

FIG. 24 (a)

FIG. 24 (b)

**EP 3 070 512 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7446733 B
- US 4101188 A

- JP 2006098775 A